# EUROPÄISCHE PATENTSCHRIFT

(11) **EP 2 363 265 B1**
(45) Veröffentlichungstag und Bekanntmachung des Hinweises auf die Patenterteilung: **25.03.2015**
(21) Anmeldenummer: 11001231.7
(22) Anmeldetag: 15.02.2011
(51) Int. Cl.: B29C 33/72, B29C 45/17

(54) **Verfahren zum Spritzgiessen von Kunststoffteilen**
Method for injection moulding plastic pieces
Procédé de moulage par injection de pièces en matière plastique

(30) Priorität: 02.03.2010 DE 102010009881; 29.07.2010 DE 102010032756; 11.03.2010 EP 10002579
(43) Veröffentlichungstag der Anmeldung: 07.09.2011
(73) Patentinhaber: Linde AG, 80331 München (DE)
(72) Erfinder: Praller, Andreas, 82110 Germering (DE); Orsén, Mikael, 23136 Trelleborg (SE); Magnus, Günter, 74933 Neidenstein (DE)
(74) Vertreter: Gellner, Bernd

(56) Entgegenhaltungen:
- WO-A1-81/00535
- WO-A1-89/05225
- DE-C1- 4 435 012
- JP-A- 6 155 529
- JP-A- 2007 290 306

## Beschreibung

Die Erfindung betrifft ein Verfahren zum Herstellen von Kunststoffteilen nach dem Gasinnendruckverfahren, wobei ein Formwerkzeug geschlossen wird, um im Inneren des Formwerkzeugs eine Kavität zu bilden, eine Kunststoffschmelze in die Kavität eingespritzt und anschließend ein Druckgas in die Kavität injiziert wird.

Beim Spritzgussverfahren zur Herstellung von Kunststoffteilen wird eine Formmasse verflüssigt und als Schmelze in ein Formwerkzeug eingespritzt. Die Kavität des Formwerkzeugs bestimmt die Form und Oberflächenstruktur des herzustellenden Kunststoffteils.

Das Gas-Innendruck-Verfahren oder Gas-Innendruck-Spritzgießen ist eine Variante des Spritzgießens, bei der die Formmasse in die Kavität des Formwerkzeugs eingefüllt und anschließend ein Druckgas unter hohem Druck von bis zu 350 bar über Gasinjektoren in die Schmelze injiziert wird. Das Druckgas verdrängt die Schmelze, wodurch sich gezielt Hohlräume in dem Kunststoffteil herstellen lassen.

Der gesamte Prozess läuft bei hohen Temperaturen von bis zu 400 °C, je nach Art des zu verarbeitenden Kunststoffs, und hohen Drücken ab. Unter diesen extremen Bedingungen kann der Luftsauerstoff mit Bestandteilen der Kunststoffschmelze reagieren und schädliche Oxidationsreaktionen hervorrufen. Die Folge sind Verschmutzungen der Gasinjektoren, ein instabiler Prozess, erhöhte Ausschussmenge, Stillstandszeiten und verminderte Qualität.

Aus diesem Grund wird als Druckgas ein inertes Gas, in der Regel Stickstoff, verwendet, welches auch unter den extremen Bedingungen im Formwerkzeug keine Reaktionen mit der Kunststoffschmelze eingeht.

Bisher wurde der Tatsache, dass beim Einspritzen der Kunststoffschmelze noch Luft in der Kavität ist, wenig Beachtung geschenkt. Es wurde vermutet, dass in der Kavität vorhandene Luft während des Einspritzens der Schmelze verdrängt wird. Es hat sich aber gezeigt, dass die in der Kavität vorhandene Luft nicht vollständig aus dem Formwerkzeug verdrängt wird, sondern je nach Dichtheit des Formwerkzeugs beispielsweise auch in den Gasinjektor, Bohrungen oder Sacklöcher in der Kavität gedrückt wird und dort verbleibt.

Bei der nachfolgenden Injektion des Druckgases in die Kunststoffschmelze zum Ausformen des Hohlraums wird dann erst diese Luft in die Schmelze gedrückt, bevor das inerte Druckgas in die Schmelze gelangt. Der in der Luft enthaltene Sauerstoff reagiert mit Bestandteilen des Kunststoffs oder mit dem Kunststoff zugesetzten Additiven, wobei Oxidationsprodukte entstehen, die die Gasinjektoren und andere Anlagenbestandteile, wie Schläuche und Ventile, verschmutzen. Zudem wirken sich die Oxidationsprodukte negativ auf die Oberflächenqualität der erzeugten Kunststoffteile aus. Der negative Einfluss der in der Kavität verbliebenen Luft konnte in umfangreichen Versuchen bestätigt werden.

Aus der DE 44 35 012 C1 ist ein Verfahren zum Herstellen von Kunststoffgegenständen nach dem Gasinnendruckverfahren, wobei die Fluideinspritzelemente für das Druckgas nach dem Öffnen des Formwerkzeugs gekühlt werden.

Aus der WO 89/05225 ist ein Verfahren zum Spritzgießen bekannt, bei dem die Form mit einem nicht reaktiven Gas gespült wird.

Der Erfindung liegt daher die Aufgabe zugrunde, ein Verfahren zur Herstellung von Kunststoffteilen aufzuzeigen, welches die oben genannten schädlichen Reaktionen möglichst vermeidet.

Eine weitere Aufgabe der Erfindung ist es, ein Verfahren bereit zu stellen, mit dem mittels des Gasinnendruckverfahrens Kunststoffformteile höherer Qualität hergestellt werden können.

Eine weitere Aufgabe der vorliegenden Erfindung ist es, ein Verschmutzen oder Verstopfen der Werkzeugteile, insbesondere der Gasinjektoren zu verhindern.

Eine oder mehrere der vorgenannten Aufgaben werden durch ein Verfahren zum Herstellen von Kunststoffteilen nach dem Gasinnendruckverfahren, wobei ein Formwerkzeug geschlossen wird, um im Inneren des Formwerkzeugs eine Kavität zu bilden, eine Kunststoffschmelze in die Kavität eingespritzt und anschließend ein Druckgas in die Kavität injiziert wird, und welches dadurch gekennzeichnet ist, dass nach dem Schließen des Formwerkzeugs und vor dem Einspritzen der Schmelze ein Spülgas mit einem Druck zwischen 3 und 50 bar, vorzugsweise mit einem Druck zwischen 5 und 30 bar, in die Kavität geleitet wird. Vorteilhafte Ausgestaltungen sind in den Unteransprüchen angegeben.

Bei dem erfindungsgemäßen Verfahren wird, bevor die Schmelze in die Kavität eingespritzt wird, ein Spülgas in die Kavität geleitet, insbesondere wird die Kavität mit einem Spülgas gespült. Durch das erfindungsgemäße Einleiten von Spülgas in die Kavität wird die in der Kavität vorhandene Luft zumindest teilweise verdrängt und gegen das Spülgas ausgetauscht. Nachfolgend wird die Schmelze in die Kavität eingespritzt und ausgeformt.

Der Begriff "Schmelze" soll jede Art von Formmasse umfassen, die eine geeignete Viskosität aufweist, um in einer Kavität zu dem gewünschten Kunststoffteil ausgeformt zu werden.

Unter dem Begriff "Kavität" wird insbesondere ein Hohlraum in einem Form- oder Spritzgusswerkzeug verstanden, der die äußere Form des herzustellenden Kunststoffteils bestimmt oder zumindest mitbestimmt. Die Kavität stellt eine Negativform des herzustellenden Kunststoffteils oder eines Teils des gewünschten Kunststoffteils dar. Die Kavität ist in der Regel insoweit dicht, dass keine Schmelze aus der Kavität austritt. Die Kavität ist dagegen nicht unbedingt gasdicht ausgeführt. Insbesondere über Zu- oder Ableitungen, Spalte oder sonstige Undichtigkeiten kann beispielsweise das injizierte Spülgas aus der Kavität austreten.

Die Begriffe "Werkzeug" und "Formwerkzeug" werden im Rahmen dieser Anmeldung synonym verwendet und kennzeichnen ein Spritzgusswerkzeug, welches eine zur Herstellung eines Kunststoffteils geeignete Kavität aufweist. In der Regel dient das Werkzeug zur Herstellung großer Stückzahlen von Kunststoffteilen. Der Kunststoff wird in das Werkzeug mit hohem Druck eingespritzt, das Kunststoffteil kühlt ab und wird nach einer gewissen Zeit aus dem Werkzeug ausgestoßen.

Unter dem Begriff "Spülen" wird das Zuführen, Einspritzen, Injizieren oder sonstige Zugeben eines Spülgas in die Kavität verstanden, um die in der Kavität vorhandene Luft zumindest teilweise zu verdrängen und den Sauerstoffgehalt in der Kavität zu verringern.

In der Regel besteht das Spritzgusswerkzeug aus zwei oder mehr Werkzeugteilen, die voneinander getrennt oder relativ zueinander bewegt werden können, um das Werkzeug bzw. die Kavität zu öffnen und zu schließen. Bei dem erfindungsgemäßen Verfahren wird zunächst das Werkzeug geschlossen, so dass sich im Werkzeug eine Kavität bildet. Die Kavität wird dann mit dem Spülgas gespült. Die anfangs in der Kavität befindliche Luft wird dabei aus der Kavität gedrückt und entweicht über die Öffnung, über die die Schmelze zugeführt werden soll, über einen etwaigen Spalt oder eine Undichtigkeit zwischen den einzelnen Werkzeugteilen oder über eine sonstige Verbindung der Kavität mit der Umgebung.

Durch das Spülen der Kavität wird der Sauerstoffgehalt der in der Kavität befindlichen Atmosphäre reduziert und die Kavität inertisiert oder zumindest teilinertisiert. Der Sauerstoffgehalt wird dabei vorzugsweise soweit abgesenkt, dass er weniger als 10 Vol-%, besonders bevorzugt weniger als 1 Vol-%, ganz besonders bevorzugt weniger als 0,1 Vol-% beträgt.

Beim Einspritzen der Kunststoffschmelze in die Kavität wird ein Großteil der in der Kavität befindlichen Atmosphäre verdrängt. Wie eingangs erwähnt, kann jedoch in Löchern, Bohrungen oder engen Vertiefungen Luft verbleiben, die dann unerwünschte Oxidationsreaktionen hervorrufen kann. Insbesondere bei Kavitäten mit engen oder tiefen Bohrungen oder Spalten hat es sich bewährt, das Spülgas direkt in die genannten Vertiefungen, Löcher und Bohrungen einzuleiten. Häufig ist es in diesem Fall nicht notwendig, die gesamte Kavität zu inertisieren.

Durch den Austausch der in der Kavität befindlichen Luft gegen das Spülgas werden die oxidierenden Bestandteile in der Atmosphäre innerhalb der Kavität reduziert, so dass sie nicht mehr mit Bestandteilen des Kunststoffs reagieren. Oxidationsreaktionen mit dem Kunststoff bzw. Additiven werden reduziert oder vermieden. Dadurch tritt eine geringere Verschmutzung des Werkzeugs auf. Folglich können die Reinigungszeiten verkürzt werden. Der Wartungs- und Reinigungsaufwand der Werkzeuge wird reduziert und die Produktivität steigt. Ferner können hochwertige Kunststoffformteile mit hoher Oberflächenqualität hergestellt werden. Die Prozesse laufen stabiler ab, wodurch der Ausschuss reduziert wird.

Die Erfindung ist für alle Spritzgießverfahren geeignet, bringt aber besondere Vorteile beim Gas-Innendruckverfahren. Bei diesem Verfahren wird nach dem Einspritzen der Schmelze in die Kavität ein Druckgas in die Form injiziert, um die Schmelze an die Wandungen der Kavität zu drücken und einen Hohlraum im Inneren zu erzeugen. Das Druckgas wird über einen oder mehrere mit der Kavität verbundene Gasinjektoren unter hohem Druck in die Schmelze injiziert. Im Gegensatz zu den Schäumverfahren, bei denen ein Treibgas der Schmelze zugemischt, in dieser gelöst und dann die Schmelze gemeinsam mit dem Treibgas in die Kavität injiziert wird, erfolgt beim Gasinnendruckverfahren die Gaszugabe, das heißt die Druckgaszugabe, erst, nachdem die Schmelze in die Kavität injiziert wurde. Schmelze und Druckgas kommen erst in der Kavität miteinander in Kontakt.

Bisher war man der Auffassung, dass die in der Kavität befindliche Luft beim Einspritzen der Schmelze aus der Kavität verdrängt wird. Es hat sich jedoch gezeigt, dass bei dem herkömmlichen Verfahren ein Teil der Luft von der eingespritzten Schmelze in die Anschlussstellen der Gasinjektoren an die Kavität gedrängt wird. Bei der Injektion des Druckgases wird diese Luft dann wieder zurück in die Schmelze gedrückt und verursacht die beschriebenen negativen Oxidationsreaktionen. Durch das erfindungsgemäße Spülen wird die Luft auch aus den Anschlussstellen der Gasinjektoren gespült und durch das Spülgas ersetzt. Nach Beendigung dieses Spülvorgangs wird der Kunststoff in die Kavität eingespritzt und in der Folge der normale Gas-Innendruck-Prozess durchgeführt. Das heißt, die Schritte Spülgaszuführung, Injektion der Schmelze und Injektion des Druckgases erfolgen nacheinander und nicht, auch nicht teilweise, gleichzeitig.

Die Erfindung eignet sich sowohl für das Aufblasverfahren, bei dem die Kavität nur zum Teil mit Schmelze gefüllt und anschließend mittels des Druckgases an die Wände des Werkzeugs gedrückt wird, so dass ein Hohlkörper entsteht, als auch für das Nebenkavitätenverfahren. Bei letzterem Verfahren wird die Kavität zunächst ganz mit der Schmelze gefüllt. In einem zweiten Schritt wird ein Teil der Schmelze mittels des Druckgases in eine an die Kavität angeschlossene Nebenkavität gedrückt. Ferner ist die Erfindung beim Gasaußendruckverfahren (external gas moulding) mit Vorteil einsetzbar. Bei diesem Verfahren wird ein Druckgas genutzt, um den Kunststoff bzw. die Kunststoffschmelze ähnlich wie beim Prägen zu verdichten.

Vorzugsweise wird ein inertes Gas als Spülgas und/oder als Druckgas eingesetzt. Für diesen Zweck eignen sich besonders Inertgase wie Stickstoff, Kohlendioxid, Argon oder Helium oder Gemische dieser Gase.

Es ist ferner von Vorteil, ein reduzierend wirkendes Gas als Spülgas und/oder als Druckgas einzusetzen oder dem Spülgas und/oder dem Druckgas einen reduzierenden Gaszusatz beizufügen. Hierfür geeignet sind z.B. Wasserstoff (H₂), Kohlenmonoxid (CO) oder Ammoniak (NH₃). Das Spülen kann auch mit einem Inertgas mit reduzierendem Gaszusatz erfolgen, z.B. mit Stickstoff, dem Wasserstoff als reduzierende Komponente zugesetzt wurde, beispielsweise mit einem Gasgemisch aus 95% N₂ und 5% H₂ (Formiergas).

Es kann weiterhin von Vorteil sein, die Kavität nacheinander mit unterschiedlichen Gasen oder Gasgemischen zu spülen. Zum Beispiel kann die Kavität zunächst mit Stickstoff inertisiert werden und dann zum Abschluss der Spülphase ein reduzierend wirkendes Gas oder ein anderes Inertgas, wie z.B. Helium, eingeleitet werden.

Bevorzugt wird dieselbe Gasart als Spülgas und als Druckgas verwendet, insbesondere ist es vorteilhaft, Stickstoff zum Spülen und als Druckgas zum Ausformen einzusetzen.

In einer ganz bevorzugten Ausführungsform werden das Spülgas und das Druckgas über denselben Injektor in die Kavität eingespritzt. Auf diese Weise wird eine besonders gute Spülung der Anschlussstellen der Gasinjektoren an die Kavität gewährleistet. Eventuelle Toträume an der Verbindung bzw. den Anschlüssen der für die Zuführung des Druckgases vorgesehenen Gasinjektoren werden so gründlich gespült. Der Sauerstoffgehalt in der Kavität wird zuverlässig reduziert. Bei der Injektion des Druckgases wird nur Spülgas zurück in die Schmelze gedrängt, welches vorzugsweise keine oxidierenden Bestandteile enthält.

Weist die Kavität außer oder anstelle der Anschlüsse für die Gasinjektoren weitere nicht durchgehende Bohrungen, Sacklöcher, Einschnitte oder enge Vertiefungen auf, so ist es günstig, das Spülgas (auch) direkt über diese Stellen der Kavität zuzuführen, um diese gut zu spülen.

Ganz besonders bevorzugt wird durch denselben Gasinjektor auch dieselbe Gasart als Spülgas und als Druckgas zugeführt, d.h. dieselbe Gasart wird sowohl zum Spülen als auch zum späteren Ausformen der Schmelze bzw. des Kunststoffteils verwendet, und wird jeweils über denselben Gasinjektor in die Kavität injiziert.

Übliche Anlagen für das Gasinnendruckverfahren sind mit Druckregelmodulen ausgestattet, mittels derer der Zeitpunkt und die Dauer der Zuführung des Druckgases und der Druck, unter dem das Druckgas in die Form injiziert wird, eingestellt und geregelt werden. In einer bevorzugten Ausführung der Erfindung werden diese Druckregelmodule auch zur Steuerung und Regelung der Spülgaszuführung verwendet. Der Zeitpunkt der Spülgaszufuhr, deren Dauer und der Spülgasdruck werden mit Hilfe eines Druckregelmoduls gesteuert und geregelt, welches auch die Zufuhr des Druckgases regelt. Dadurch werden keine zusätzlichen Umschalt- oder Regelelemente benötigt und auch die Zahl der Ventile wird so gering wie möglich gehalten.

Von Vorteil werden das Druckregelmodul sowie die für die Zufuhr und Steuerung des Druckgases notwendigen Elemente, wie zum Beispiel Hochdruckventile oder Gasinjektoren, auch für die erfindungsgemäße Spülung der Form verwendet. So wird beispielsweise nach dem Schließen der Form ein Signal zum Starten des Spülvorgangs an das Druckregelmodul gesendet. Das Druckregelmodul startet daraufhin die Zufuhr des Spülgases bei einem vorgegebenen Spülgasdruck. Auch die Spüldauer wird vorzugsweise am Druckregelmodul voreingestellt. Nach Ablauf der Spüldauer wird die Spülgaszufuhr unterbrochen und eine Kunststoffschmelze in die gespülte und damit im Wesentlichen sauerstofffreie Kavität eingespritzt. Mit einem zweiten Signal wird die eigentliche Gasinjektion gestartet, d.h. das Druckgas in die Kunststoffschmelze, das heißt in den noch schmelzflüssigen Kunststoff, injiziert. Die Injektion des Druckgases erfolgt entsprechend vorgegebener Parameter und wird über dasselbe Druckregelmodul geregelt, welches auch die Spülgaszufuhr steuert bzw. regelt . Sowohl als Spülgas als auch als Druckgas wird bevorzugt Stickstoff verwendet. Grundsätzlich ist es von Vorteil, das Spülgas so der Kavität zuzuführen, dass eine möglichst die ganze Kavität erfassende Spülgasströmung erzeugt wird. Auf diese Weise wird sichergestellt, dass die in der Kavität vorhandene Luft schnell und möglichst vollständig verdrängt wird.

Es hat sich insoweit als günstig erwiesen, das Spülgas an einer Stelle der Kavität zuzuführen, die einer Öffnung der Kavität zur Umgebung, über die die verdrängte Luft aus der Kavität entweichen kann, möglichst gegenüber liegt. Auf diese Weise wird eine gute Spülung der gesamten Kavität erreicht. Es wird sichergestellt, dass keine Toträume verbleiben, die von dem Spülgas nicht oder nur unzureichend erreicht werden.

Beim Zuführen des Spülgases über den Gasinjektor für das Druckgas kann die Luft beispielsweise über den Anspritzpunkt in der Kavität entweichen, d.h. über eine Öffnung, über die die Schmelze in die Kavität gespritzt wird und welche vor dem Schmelzeeinspritzen von der Einspritzdüse der Maschine zwar dicht für die Schmelze, aber nicht gasdicht verschlossen wird. Dieser Anspritzpunkt liegt oft an dem dem Gasinjektor gegenüberliegenden Ende der Kavität, so dass eine gute Spülung der Kavität erzielt wird, d.h. die Luft verdrängt und eine ausreichende Reduzierung der Sauerstoffkonzentration erreicht wird.

Das Spülgas wird erfindungsgemäß mit einem Druck zwischen 5 und 30 bar in die Kavität eingebracht.

Der Spülvorgang erfolgt vorzugsweise für eine Dauer von 1 bis 5 Sekunden mit dem Spülgas. Es hat sich gezeigt, dass diese Zeitspanne ausreicht, um die Kavität soweit zu inertisieren, dass Oxidationsreaktionen der Kunststoffschmelze mit der Kavitätsatmosphäre kaum noch auftreten. Der Spülgasstrom wird während dieser Zeitspanne vorzugsweise konstant gehalten. Es kann aber in Einzelfällen auch vorteilhaft sein, den Spülgasstrom zu variieren.

Bei erhöhten Ansprüchen an die Oberflächengüte der Kunststoffteile wird das Spülgas mit einer Temperatur zwischen 40 °C und 90 °C, in die Kavität eingespeist. Die Temperatur des Spülgases sollte vorzugsweise so hoch sein, dass die Stelle der Kavitätswandung, auf die der in die Kavität eingesprühte Spülgasstrom auftrifft, nicht zu stark abgekühlt wird. Ansonsten bildet sich eine im Vergleich zur restlichen Kavität kältere Stelle der Kavitätswand, an der die nachfolgend eingespritzte Schmelze schneller aushärtet als in der restlichen Kavität, wodurch unterschiedliche Oberflächenqualitäten oder sogar Oberflächenfehler, wie z.B. Schattenbildung, auf den Kunststoffteilen auftreten können. Vorzugsweise wird daher die Temperatur des Spülgases an die Temperatur der Kavitätswand angepasst, d.h. das Spülgas wird mit der Temperatur der Kavitätswand eingespeist. In diesem Fall wird eine lokale Abkühlung der Kavität vermieden. Die Temperatur der Kavität wird in Abhängigkeit von dem zu verarbeitenden Kunststoff gewählt, vorzugsweise auf einen Wert zwischen 40 °C und 80 °C.

Vorzugsweise weicht die Spülgastemperatur um höchstens 10 °C von der Temperatur der Kavitätswand ab. Entscheidend ist die Temperatur des Spülgases, wenn dieses auf die Wand der Kavität auftrifft. Zu diesem Zeitpunkt sollten die Spülgastemperatur und die Kavitätstemperatur möglichst nahe beieinander liegen, um die Temperatur der Kavität an der Auftreffstelle des Spülgases auf die Kavität nicht lokal zu ändern.

Beim Einspritzen des Spülgases in die Kavität, expandiert das Spülgas in gewissem Umfang und kühlt sich etwas ab. Von Vorteil wird daher die Temperatur des Spülgases vor dem Einleiten in die Kavität um bis zu 10°C höher als die Temperatur der Kavität gewählt.

Die Erfindung sowie weitere Einzelheiten der Erfindung werden im Folgenden anhand von in den Zeichnungen dargestellten Ausführungsbeispielen näher erläutert. Hierbei zeigen:
- Figur 1: eine Gasversorgung zur Durchführung eines Gasinnendruckverfahrens gemäß der Erfindung,
- Figur 2: den Verlauf des Spülgasstromes über der Zeit und
- Figur 3: den Verlauf des Druckgasstromes über der Zeit.

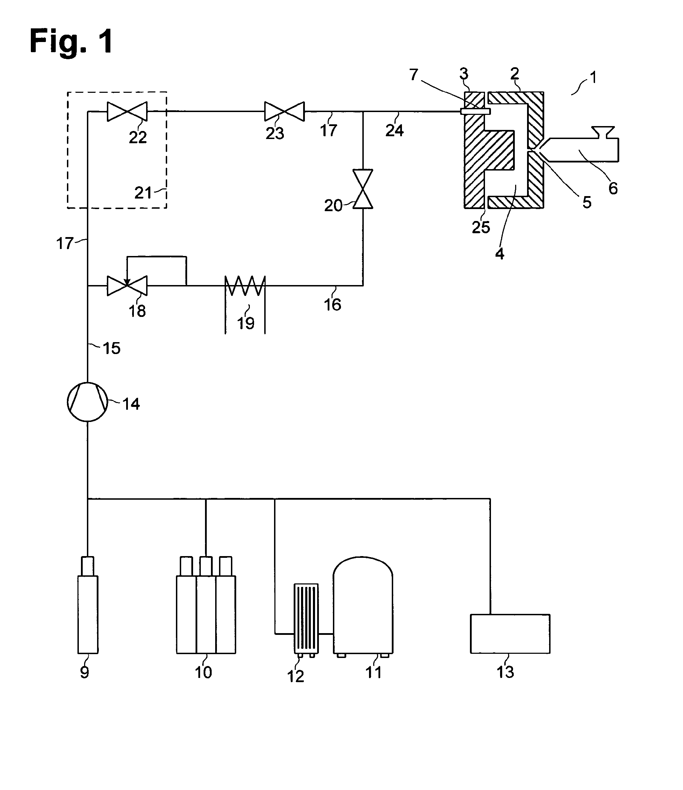

In Figur 1 ist schematisch eine Anlage zur Herstellung von Kunststoffteilen mittels der Gasinnendrucktechnik gezeigt. Das Spritzgusswerkzeug 1 ist zweiteilig aus einem ersten Formteil 2 und einem zweiten Formteil 3 ausgebildet. Durch die beiden Formteile 2, 3 wird eine Kavität 4 gebildet, in die eine Kunststoffschmelze eingespritzt werden kann. Hierzu ist das Werkzeugteil 2 mit einer Anschlussöffnung 5 versehen, an die eine Einspritzeinrichtung 6 angeschlossen ist. Die Einspritzeinrichtung 6 weist eine in der Figur nicht dargestellte Förderschnecke auf, mit deren Hilfe eine Kunststoffschmelze in die Kavität 4 gefördert werden kann. Der Übersichtlichkeit halber ist in Figur 1 ein Spritzgusswerkzeug 1 mit nur einer Kavität 4 dargestellt. Selbstverständlich ist die Erfindung auch bei Werkzeugen mit mehreren Kavitäten einsetzbar.

Das zweite Formteil 3 weist einen Gasinjektor 7 auf, der an ein Gasversorgungssystem angeschlossen ist, welches gasförmigen Stickstoff unter hohem Druck bereit stellt. In Figur 1 sind mehrere mögliche Gasquellen zur Versorgung des Spritzgusswerkzeugs mit Stickstoff dargestellt, von denen eine oder auch mehrere verwendet werden können.

Der Stickstoff kann beispielsweise in gasförmigem Zustand in einer einzelnen Druckgasflasche 9 oder in einem Flaschenbündel 10 gespeichert sein. Alternativ kann auch flüssiger Stickstoff einem Flüssigtank 11 entnommen und anschließend in einem Verdampfer 12 verdampft werden. Ebenso ist es möglich, gasförmigen Stickstoff mit Hilfe einer Membran- oder PSA-Anlage 13 zu gewinnen.

An die Gasquelle(n) schließt sich ein Gasverdichter 14 an, der eine Erhöhung des Drucks des gasförmigen Stickstoffs auf bis zu 500 bar, vorzugsweise 300 bis 350 bar, ermöglicht. Stromabwärts des Gasverdichters 14 verzweigt die Gasversorgungsleitung 15 in eine Spülgaszufuhrleitung 16 und in eine Druckgaszufuhrleitung 17.

In der Spülgaszufuhrleitung 16 sind ein Druckminderer 18, eine Heizeinrichtung 19 zur Erwärmung des Stickstoffs und ein Absperrventil 20 vorgesehen. Der Druckminderer 18 ermöglicht eine Reduzierung des Drucks des zugeführten Stickstoffs auf einen Wert zwischen 3 und 50 bar, vorzugsweise zwischen 5 und 30 bar.

In der Druckgaszufuhrleitung 17 sind ein Regelmodul 21 mit einem Regelventil 22 und ein Absperrventil 23 vorgesehen.

Stromabwärts der Absperrventile 20, 23 sind die Spülgaszufuhrleitung 16 und die Druckgaszufuhrleitung 17 in eine Gaszuleitung 24 zusammengeführt, an die der Gasinjektor 7 angeschlossen ist.

Im Folgenden wird das erfindungsgemäße Verfahren anhand der in Figur 1 dargestellten Vorrichtung beispielhaft beschrieben.

Der Gasquelle 9, 10, 11, 12, 13 wird gasförmiger Stickstoff entnommen und dem Gasverdichter 14 zugeführt. Mittels des Gasverdichters 14 wird der Druck des Stickstoffs auf 330 bar erhöht und in die Spülgaszufuhrleitung 16 und in die Druckgaszufuhrleitung 17 geleitet. Die Absperrventile 20 und 23 in der Spülgaszufuhrleitung 16 bzw. in der Druckgaszufuhrleitung 17 sind zunächst geschlossen.

Die Einspritzeinrichtung 6 wird so zur Anschlussöffnung 5 angeordnet, dass eine flüssigkeitsdichte Verbindung entsteht. Der Kontakt zwischen Einspritzeinrichtung 6 und Anschlussöffnung 5 ist jedoch nicht gasdicht.

Vor dem Einspritzen der Kunststoffschmelze werden die Formteile 2, 3 zusammengeführt, um das Spritzgusswerkzeug 1 zu schließen, so dass sich zwischen den Formteilen 2, 3 die Kavität 4 ausbildet. Die Kavität 4 wird dann mit dem Spülgas gespült. Hierzu wird der Druck des Stickstoffs in der Spülgaszufuhrleitung 16 mittels des Druckminderers 18 auf einen Wert von 5 bar bis 30 bar abgesenkt. Anschließend wird der Stickstoff mit Hilfe der Heizeinrichtung 19 erwärmt, zum Beispiel auf eine Temperatur von bis zu 90 °C, vorzugsweise auf eine Temperatur zwischen 40 °C und 80 °C.

Das Absperrventil 20 wird geöffnet und der angewärmte Stickstoff strömt als Spülgas über die Gaszuleitung 24 und den Gasinjektor 7 in die Kavität 4. Der in die Kavität 4 einströmende Stickstoff verdrängt die in der Kavität 4 befindliche Luft, welche über Spalte oder Öffnungen 25 zwischen den Formteilen 2, 3 oder über die Anschlussöffnung 5 für die Einspritzeinrichtung 6 an die Umgebung entweicht. Der Spülvorgang mit Stickstoff erfolgt für die Dauer von 2 bis 4 Sekunden. Die Spüldauer wird vorzugsweise so eingestellt, dass der Sauerstoffgehalt in der Kavität nach dem Spülen auf weniger als 10 Vol-%, bevorzugt auf weniger als 5 Vol-% abgesunken ist. Anschließend wird das Absperrventil 20 wieder geschlossen.

Nun erfolgt das Einspritzen der Kunststoffschmelze in die im Wesentlichen sauerstofffreie Kavität 4. Nachdem die vorgesehene Menge Kunststoffschmelze in die Kavität 4 eingespritzt wurde, wird die Injektion des Druckgases in die in der Kavität 4 befindliche Kunststoffschmelze vorgenommen.

Über das Regelmodul 21 und das Regelventil 22 wird der Druck des in der Druckgaszufuhrleitung 17 strömenden Stickstoffs auf einen Wert zwischen 50 und 250 bar eingestellt. Der genaue Druck hängt von der Art des verarbeiteten Kunststoffs und dem herzustellenden Erzeugnis ab. Es ist auch möglich, den Druck entsprechend einer vorgegebenen Kurve oder in Abhängigkeit von bestimmten Parametern, beispielsweise der Temperatur des Kunststoffs, zu regeln.

Nach dem Einspritzen der Kunststoffschmelze und der Injektion des Druckgases wird der Druck des Druckgases im Inneren des Kunststoffteils aufrecht erhalten. Durch die Aufrechterhaltung des Drucks im Inneren des Kunststoffteils wird die Außenfläche des Kunststoffteils gegen die Innenfläche der Kavität gedrückt. Währenddessen kühlt das Kunststoffteil ab und verfestigt sich. Wenn das Kunststoffteil ausgehärtet ist, wird das Ventil 23 wieder geschlossen und die Beaufschlagung des Kunststoffteils mit Druckgas beendet. Der als Druckgas eingesetzte Stickstoff wird entweder über ein nicht dargestelltes Gasrückgewinnungssystem gesammelt und wiederverwendet oder an die Umgebung abgegeben. Nachdem der Druck im Spritzgusswerkzeug 1 abgebaut ist, kann das Werkzeug 1 geöffnet und das erzeugte Kunststoffteil entnommen bzw. ausgeworfen werden.

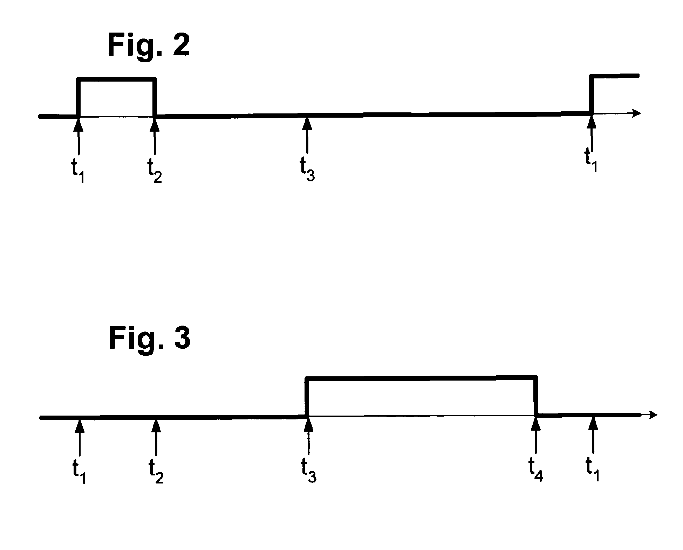

In den Figuren 2 und 3 ist die Abhängigkeit des Spülgasstromes (Figur 2) und des Druckgasstromes (Figur 3) von der Zeit dargestellt. Zum Zeitpunkt t₁ wird das Spritzgusswerkzeug 1 geschlossen. Die Kavität 4 wird von diesem Zeitpunkt an bis zum Beginn t₂ des Einspritzens der Kunststoffschmelze gespült. In Figur 2 ist zu erkennen, dass in der Zeitspanne t₁ bis t₂, d.h. vom Schließen des Spritzgusswerkzeugs bis zum Einspritzen der Schmelze, ein konstanter Strom an Spülgas - im vorliegenden Fall Stickstoff - durch die Kavität 4 geleitet wird.

Vorzugsweise wird der Spülgasstrom, wie in Figur 2 gezeigt, während des Spülens konstant gehalten. Es kann aber auch vorteilhaft sein, den Spülgasstrom während des Spülens zu variieren, d.h. die Menge an Spülgas, die in bzw. durch die Kavität geleitet wird, abhängig von der Zeit, dem Sauerstoffgehalt in der Atmosphäre in der Kavität, der Form der Kavität oder anderen Parametern zu ändern.

Figur 3 zeigt den Verlauf des Druckgasstromes. Das Druckgas wird zu einem Zeitpunkt t₃ in die Kavität 4 geleitet, an dem das Einspritzen der Kunststoffschmelze abgeschlossen ist. Vorzugsweise erfolgt die Beaufschlagung mit Druckgas unmittelbar nach Beendigung des Einspritzens der Schmelze. Der Druckgasstrom wird solange aufrechterhalten, bis das Kunststoffteil abgekühlt ist und entnommen werden kann (Zeitpunkt t₄). Danach kann ein neuer Spritzgießzyklus beginnen.

## Patentansprüche

1. Verfahren zum Herstellen von Kunststoffteilen nach dem Gasinnendruckverfahren, wobei ein Formwerkzeug geschlossen wird, um im Inneren des Formwerkzeugs eine Kavität zu bilden, eine Kunststoffschmelze in die Kavität (4) eingespritzt und anschließend ein Druckgas in die Kavität (4) injiziert wird, **dadurch gekennzeichnet,** dass nach dem Schließen des Formwerkzeugs und vor dem Einspritzen der Schmelze ein Spülgas mit einem Druck zwischen 3 und 50 bar, vorzugsweise mit einem Druck zwischen 5 und 30 bar, und einer Temperatur zwischen 40 °C und 90 °C in die Kavität (4) geleitet wird.

2. Verfahren nach Anspruch 1, **dadurch gekennzeichnet, dass** ein Inertgas und/oder ein reduzierend wirkendes Gas als Spülgas und/oder als Druckgas eingesetzt werden.

3. Verfahren nach einem der Ansprüche 1 oder 2, **dadurch gekennzeichnet, dass** das Spülgas und/oder das Druckgas Stickstoff, Kohlendioxid und/oder Argon enthalten

4. Verfahren nach einem der Ansprüche 1 bis 3, **dadurch gekennzeichnet, dass** das Spülgas und/oder das Druckgas Wasserstoff, Kohlenmonoxid und/oder Ammoniak enthalten.

5. Verfahren nach einem der Ansprüche 1 bis 4, **dadurch gekennzeichnet, dass** das Spülgas und das Druckgas über denselben Injektor (7) in die Kavität (4) eingespritzt werden.

6. Verfahren nach einem der Ansprüche 1 bis 5, **dadurch gekennzeichnet, dass** die Kavität (4) 1 bis 5 Sekunden mit dem Spülgas gespült wird.

7. Verfahren nach einem der Ansprüche 1 bis 6, **dadurch gekennzeichnet, dass** die Injektion des Druckgases in die Kavität und das Einleiten des Spülgases in die Kavität mittels desselben Druckregelmoduls geregelt werden.

## Claims

1. Method for producing plastic parts by the internal gas pressure process, a mould being closed to form a cavity within the mould, a polymer melt being injected into the cavity (4) and a compressed gas subsequently being injected into the cavity (4), **characterized in that**, after the closing of the mould and before the injection of the melt, a purging gas at a pressure of between 3 and 50 bar, preferably at a pressure of between 5 and 30 bar, and a temperature of between 40°C and 90°C being introduced into the cavity (4).

2. Method according to Claim 1, **characterized in that** an inert gas and/or a gas with a reducing effect is/are used as the purging gas and/or as the compressed gas.

3. Method according to either of Claims 1 and 2, **characterized in that** the purging gas and/or the compressed gas contain(s) nitrogen, carbon dioxide and/or argon.

4. Method according to one of Claims 1 to 3, **characterized in that** the purging gas and/or the compressed gas contain(s) hydrogen, carbon monoxide and/or ammonia.

5. Method according to one of Claims 1 to 4, **characterized in that** the purging gas and the compressed gas are injected into the cavity (4) by way of the same injector (7).

6. Method according to one of Claims 1 to 5, **characterized in that** the cavity (4) is purged with the purging gas for 1 to 5 seconds.

7. Method according to one of Claims 1 to 6, **characterized in that** the injection of the compressed gas into the cavity and the introduction of the purging gas into the cavity are controlled by means of the same pressure control module.

## Revendications

1. Procédé de fabrication de pièces en matière plastique selon le procédé d'injection de gaz, dans lequel un outil de formage est fermé afin de créer une cavité à l'intérieur de l'outil de formage, une matière plastique en fusion est injectée dans la cavité (4) et ensuite un gaz sous pression est injecté dans la cavité (4), **caractérisé en ce qu'**après la fermeture de l'outil de formage et avant l'injection de la matière en fusion, un gaz de rinçage est introduit dans la cavité (4) à une pression comprise entre 3 et 50 bar, de préférence à une pression comprise entre 5 et 30 bar, et à une température comprise entre 40°C et 90°C.

2. Procédé selon la revendication 1, **caractérisé en ce qu'**un gaz inerte et/ou un gaz à effet réducteur sont utilisés en tant que gaz de rinçage et/ou en tant que gaz sous pression.

3. Procédé selon l'une quelconque des revendications 1 ou 2, **caractérisé en ce que** le gaz de rinçage et/ou le gaz sous pression contiennent de l'azote, du dioxyde de carbone et/ou de l'argon.

4. Procédé selon l'une quelconque des revendications 1 à 3, **caractérisé en ce que** le gaz de rinçage et/ou le gaz sous pression contiennent de l'hydrogène, du monoxyde de carbone et/ou de l'ammoniac.

5. Procédé selon l'une quelconque des revendications 1 à 4, **caractérisé en ce que** le gaz de rinçage et le gaz sous pression sont injectés dans la cavité (4) par le biais du même injecteur (7).

6. Procédé selon l'une quelconque des revendications 1 à 5, **caractérisé en ce que** la cavité (4) est rincée pendant 1 à 5 secondes avec le gaz de rinçage.

7. Procédé selon l'une quelconque des revendications 1 à 6, **caractérisé en ce que** l'injection du gaz sous pression dans la cavité et l'introduction du gaz de rinçage dans la cavité sont régulées au moyen du même module de régulation de la pression.
